# NEW EUROPEAN PATENT SPECIFICATION

(11) **EP 3 530 485 B2**
(45) Date of publication and mention of the opposition decision: **01.11.2023**
(45) Mention of the grant of the patent: 26.08.2020
(21) Application number: 18212504.7
(22) Date of filing: 14.12.2018
(51) Int. Cl.: B60C 9/20, B60C 9/18, D07B 1/06

(54) **PNEUMATIC TIRE**
LUFTREIFEN
PNEUMATIQUE

(30) Priority: 22.02.2018 JP 2018029567
(43) Date of publication of application: 28.08.2019
(73) Proprietor: Sumitomo Rubber Industries, Ltd., Kobe-shi, Hyogo-ken 651-0072 (JP)
(72) Inventor: MAEDA, Yohei, Kobe-shi, Hyogo 651-0072 (JP)
(74) Representative: Manitz Finsterwald Patent- und Rechtsanwaltspartnerschaft mbB

(56) References cited:
- EP-A1- 1 983 098
- EP-A1- 3 381 714
- EP-A2- 1 213 159
- WO-A1-02/051652
- CN-U- 206 646 324
- JP-A- 2008 138 311
- US-A1- 2005 241 741
- US-A1- 2010 218 872

## Description

### BACKGROUND OF THE INVENTION

### Field of the Invention

The present invention relates to pneumatic tires. More specifically, the present invention relates to pneumatic tires mounted to two-wheeled automotive vehicles.

### Description of the Related Art

A tire for a two-wheeled automotive vehicle includes a band in a portion inward of a tread. The band includes a cord that is helically wound. A typical material of the cord is steel. The band that includes the cord formed from steel contributes to high-speed stability and high-speed durability. Furthermore, the cord is required to contribute to good ride comfort. Examples for tires comprising a band including a cord can be found in EP 1 983 098 A1, JP 2008 138311 A and EP 3 381 714 A1, respectively. Document EP 3 381 714 A1 is a prior art according to the Article 54(3) EPC.

In a two-wheeled automotive vehicle, load on a tire is lower in general as compared to that in a four-wheeled automotive vehicle. Therefore, a cord that is flexible and has a high elongation is used for a band so as to provide good ride comfort. For example, a multi-stranded cord is used as a cord for a band. JP2012-140718 suggests a cord for a tire which contributes to durability and ride comfort.

In a case where a multi-stranded cord is used as a cord for a band, reduction of cost needs to be considered. Meanwhile, for a single-stranded cord, improvement of flexibility and elongation need to be considered. Furthermore, a single-stranded cord has a high compression stiffness. A tread for a two-wheeled automotive vehicle has a small curvature radius. Therefore, compressive force is likely to be applied to a band due to deformation of the tread under a load. When a single-stranded cord is used, prevention of abrupt change of stiffness feeling due to buckling in the case of a high compressive force being applied, needs to be also considered.

An object of the present invention is to provide a pneumatic tire that can achieve good ride comfort and prevention of buckling at low cost.

### SUMMARY OF THE INVENTION

A pneumatic tire according to the present invention includes: a tread; and a band disposed inward of the tread in a radial direction. The band includes a cord that is helically wound. The cord has a single-stranded structure in which filaments formed from steel are stranded, and the number of the filaments is not less than three and not greater than six. In a cross-section perpendicular to a direction in which the cord extends, when ϕ represents a diameter of a smallest circle that surrounds cross-sections of the filaments, and ψ represents a diameter of each filament, a gap is formed between the filaments such that the diameter ϕ is not less than three times the diameter ψ and not greater than six times the diameter W in the case of the number of the filaments being three or four, and a gap is formed between the filaments such that the diameter ϕ is not less than 3.5 times the diameter W and not greater than seven times the diameter ψ in the case of the number of the filaments being five or six. An initial elongation of the cord is not less than 0.1% and not greater than 1.5%, whereby a change amount of elongation obtained when load changes from 5N to 20N in a tensile test for the cord is measured as the initial elongation, taken from the band of the tire under the following measurement conditions:
- Grip distance: 250 mm
- Tension speed: 50 mm/min
- Measurement temperature: 23°C.

In the pneumatic tire according to the present invention, the cord of the band has a single-stranded structure in which filaments formed from steel are stranded. Cost of the single-stranded cord is low. In the cord, when the number of the filaments is three or four, a gap is formed between the filaments such that a diameter ϕ of a smallest circle which surrounds cross-sections of the filaments, is not less than three times a diameter ψ of each filament and not greater than six times the diameter ψ, and, when the number of the filaments is five or six, a gap is formed between the filaments such that the diameter ϕ is not less than 3.5 times the diameter ψ and not greater than seven times the diameter ψ. The cord is "loosely" stranded. Therefore, the cord is flexible and has a high elongation. The tire provides excellent ride comfort.

Since the cord is loosely stranded in the tire, compression stiffness of the cord is reduced. Furthermore, in the cord, the initial elongation is appropriately adjusted. These contribute to inhibition of buckling. The tire allows inhibition of buckling.

Preferably, the diameter ψ of the filament is not less than 0.15 mm and not greater than 0.35 mm.

Preferably, a tensile force to the cord at a close point is not less than 30N, whereby the close point is specified by tensile test for the cord taken from the band of the tire performed under the following measurement conditions:
- Grip distance: 250 mm
- Tension speed: 50 mm/min
- Measurement temperature: 23°C,
and whereby the close point is a point at which a slope of the strain to tensile force is reduced by 70% with respect to a slope between tensile force of 5N and tensile force of 20N.

Preferably, a compressive force at a time when the cord yields is not less than 150N, whereby the compressive force at a time when the cord yields is specified by compression test for the cord taken from the band of the tire performed under the following measurement conditions.
- Grip distance: 250 mm
- Compression speed: 50 mm/min
- Measurement temperature: 23°C.

According to the invention, the band includes a center portion, and a pair of side portions disposed outward of the center portion in an axial direction, and an initial elongation of the cord at the center portion and an initial elongation of the cord at the side portion are different from each other such that the initial elongation of the cord at the center portion is less than the initial elongation thereof at the side portion.

Preferably, an angle of the cord relative to a circumferential direction of the tire is not greater than 15°.

### BRIEF DESCRIPTION OF THE DRAWINGS

FIG. 1 is a cross-sectional view of a part of a pneumatic tire according to one embodiment of the present invention;
FIG. 2 is a perspective cross-sectional view of a strip-shaped ply used for forming a band of the tire shown in FIG. 1;
FIG. 3 is a cross-sectional view of a cord of the band of the tire shown in FIG. 1;
FIG. 4 is a schematic diagram illustrating a state where the band is formed;
FIG. 5A is a cross-sectional view of the cord of the band of the tire, shown in FIG. 1, to which tensile force is applied;
FIG. 5B is a cross-sectional view of the cord of the band of the tire, shown in FIG. 1, to which compressive force is applied;
FIG. 6 shows a graph representing a relationship between tensile force and strain for the cord of the band of the tire shown in FIG. 1;
FIG. 7 shows a graph representing a relationship between compressive force and strain for the cord of the band of the tire shown in FIG. 1; and
FIG. 8 is a cross-sectional view of a cord of a band of a pneumatic tire according to another embodiment of the present invention.

### DESCRIPTION OF THE PREFERRED EMBODIMENTS

The following will describe in detail the present invention based on preferred embodiments with reference where appropriate to the accompanying drawing.

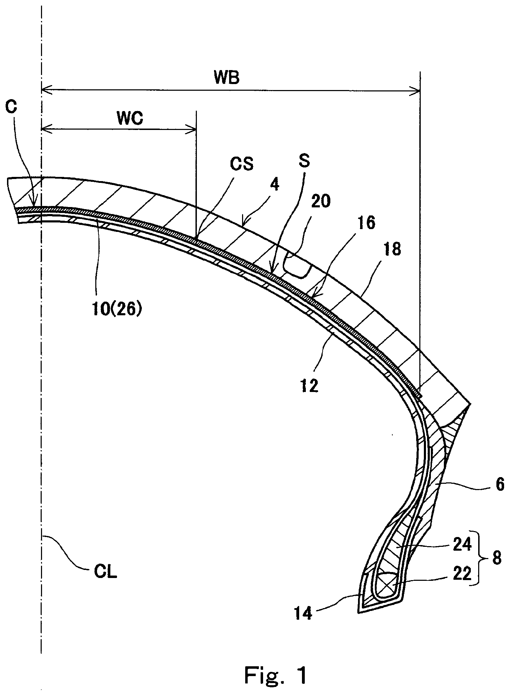

FIG. 1 shows a pneumatic tire 2 according to one embodiment of the present invention. In FIG. 1, the up-down direction represents the radial direction of the tire 2, the left-right direction represents the axial direction of the tire 2, and the direction perpendicular to the surface of the drawing sheet represents the circumferential direction of the tire 2. In FIG. 1, an alternate long and short dash line CL represents the equator plane of the tire 2. The shape of the tire 2 is symmetric about the equator plane except for a tread pattern.

The tire 2 includes a tread 4, a pair of sidewalls 6, a pair of beads 8, a carcass 10, an inner liner 12, a pair of chafers 14, and a band 16. The tire 2 is of a tubeless type. The tire 2 is mounted to a two-wheeled automotive vehicle. The tire 2 is mounted to a rear wheel of a two-wheeled automotive vehicle.

The tread 4 has a shape that projects outward in the radial direction. The tread 4 forms a tread surface 18 that is brought into contact with a road surface. The tread 4 has grooves 20 formed therein. A tread pattern is formed by the grooves 20. The tread 4 is formed from crosslinked rubber. For the crosslinked rubber of the tread 4, wear resistance, heat resistance, and grip performance are considered.

The tire 2 is mounted to a two-wheeled automotive vehicle. As shown in FIG. 1, in the tire 2, the tread surface 18 has a greatly curved outline. In the tire 2, a crown region mainly contacts with a road surface in straight running. A rider tilts the vehicle when the vehicle runs in cornering. Therefore, in the cornering, a shoulder region mainly contacts with a road surface.

Each sidewall 6 extends almost inward from the end of the tread 4 in the radial direction. The sidewall 6 is formed from crosslinked rubber that has excellent cut resistance and weather resistance. The sidewall 6 prevents damage to the carcass 10.

Each bead 8 is disposed inward of the sidewall 6 in the radial direction. Each bead 8 includes a core 22 and an apex 24. The core 22 is ring-shaped, and includes a wound non-stretchable wire. A typical material of the wire is steel. The apex 24 extends outward from the core 22 in the radial direction. The apex 24 is tapered outward in the radial direction. The apex 24 is formed from crosslinked rubber having a high hardness.

The carcass 10 includes a carcass ply 26. In the tire 2, the carcass 10 is formed from one carcass ply 26. The carcass ply 26 is extended on and between the beads 8 on both the sides, along the tread 4 and the sidewalls 6. The carcass ply 26 is turned up around the core 22 from the inner side toward the outer side in the axial direction. The carcass 10 may be formed from two or more carcass plies 26.

The carcass ply 26 has multiple cords aligned with each other, and topping rubber, which is not shown. An absolute value of an angle of each cord relative to the equator plane ranges from 75°to 90°. In other words, the carcass 10 forms a radial structure. The cord is formed from an organic fiber. Preferable examples of the organic fiber include polyester fibers, nylon fibers, rayon fibers, polyethylene naphthalate fibers, and aramid fibers.

The inner liner 12 is disposed inward of the carcass 10. The inner liner 12 is joined to the inner surface of the carcass 10. The inner liner 12 is formed from crosslinked rubber having excellent airtightness. A typical base rubber of the inner liner 12 is isobutylene-isoprene-rubber or halogenated isobutylene-isoprene-rubber. The inner liner 12 maintains internal pressure of the tire 2.

Each chafer 14 is disposed near the bead 8. When the tire 2 is mounted on a rim (not shown), the chafer 14 contacts with the rim. By the contact, a portion near the bead 8 is protected. In the present embodiment, the chafer 14 is formed from a fabric and rubber impregnated into the fabric. The chafer 14 formed from crosslinked rubber may be used.

The band 16 is disposed inward of the tread 4 in the radial direction. The band 16 is disposed between the tread 4 and the carcass 10 in the radial direction. The band 16 extends along the carcass 10 from one of the end sides of the tread surface 18 to the other of the end sides thereof.

The tire 2 may have a belt between the band 16 and the carcass 10, which is not shown. The belt includes an inner layer and an outer layer. Each layer has multiple cords aligned with each other, and topping rubber. The belt may be formed only from the inner layer.

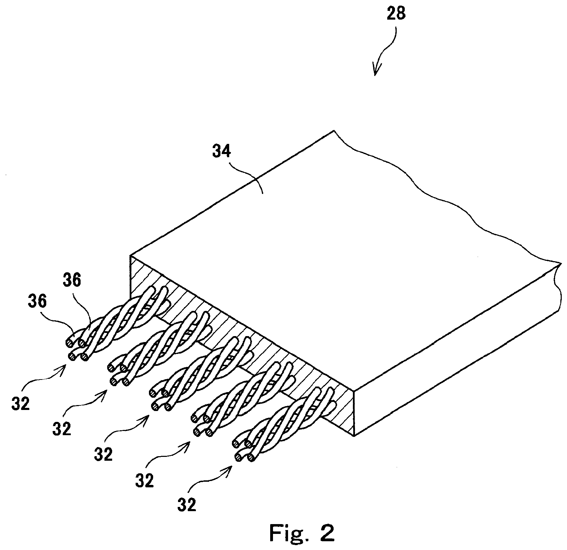

As described below, the band 16 is formed by a strip-shaped ply 28 being wound. FIG. 2 shows the strip-shaped ply 28. As shown in FIG. 2, the strip-shaped ply 28 includes cords 32 and a topping rubber 34 that covers the cords 32. The strip-shaped ply 28 includes five cords 32. The cords 32 are aligned parallel to each other in the width direction of the strip-shaped ply 28. The number of the cords 32 included in the strip-shaped ply 28 may be not greater than four, or may be not less than six. The number of the cords 32 included in the strip-shaped ply 28 is determined as appropriate in consideration of the specifications of the tire 2, productivity, or the like. As shown in FIG. 2, each cord 32 has a single-stranded structure in which a plurality of filaments 36 are stranded. In the embodiment shown in FIG. 2, the cord 32 includes four filaments 36. The material of the filament 36 is steel. As shown in FIG. 2, a gap is formed between the filaments 36. In other words, the filaments 36 are "loosely" wound.

The band 16 is formed by the strip-shaped ply 28 being helically wound. Therefore, the band 16 includes the cords 32 that are helically wound. The band 16 has a so-called jointless structure. An angle of the cord 32 relative to the circumferential direction is not greater than 15°.

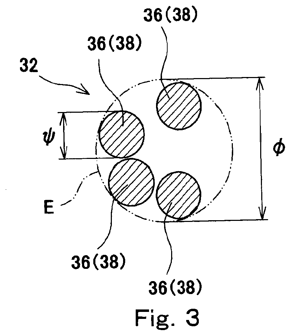

FIG. 3 shows a cross-section of the cord 32 included in the band 16. Each cord 32 is formed from the four filaments 36. Therefore, the cross-section of the cord 32 includes cross-sections 38 of the four filaments 36. The filaments 36 are loosely wound. Therefore, also in the cross-section of the cord 32 of the band 16, a gap is formed between the cross-sections 38 of the filaments 36.

In FIG. 3, a circle E indicated by an alternate long and two short dashes line represents the smallest circle that surrounds the cross-sections 38 of the filaments 36. A double-headed arrow ϕ represents the diameter of the circle E. A double-headed arrow ψ represents the diameter of one filament 36. In the band 16, the gap is formed between the filaments 36 such that the diameter ϕ is not less than three times the diameter ψ and not greater than six times the diameter ψ.

In the present invention, the diameter ϕ is measured in the following manner. That is, the tire 2 is cut in the direction perpendicular to the extending direction of the cord 32 at an arbitrarily selected position, and the diameters of the circles E are measured for all the cross-sections of the cords 32 that are in the cross-section of the band 16. The average of the diameters is determined as the diameter ϕ.

In the tire 2, the band 16 includes a center portion C and a pair of side portions S. The band 16 is formed from the center portion C and the pair of side portions S. The center portion C is disposed at the center portion, in the axial direction, of the band 16. Each side portion S is disposed outward of the center portion C in the axial direction. In FIG. 1, reference character CS represents a boundary between the center portion C and the side portion S.

In the tire 2, an initial elongation of the cord 32 at the center portion C and an initial elongation thereof at the side portion S are different from each other. In the present embodiment, the initial elongation of the cord 32 at the center portion C is less than the initial elongation thereof at the side portion S. The initial elongation of the cord 32 at one of the side portions S and the initial elongation thereof at the other of the side portions S are the same. In the tire 2, the initial elongation of the cord 32 is not less than 0.1% and not greater than 1.5%. That is, the initial elongation at the center portion C is not less than 0.1%, and the initial elongation at the side portion S is not greater than 1.5%.

In the present invention, the initial elongation of the cord 32 is specified by tensile test for the cord 32 by using a commercially available tensile testing machine in compliance with "JIS G3510". Specifically, a change amount of elongation obtained when load changes from 5N to 20N in the tensile test for the cord 32 taken from the band 16 of the tire 2 under the following measurement conditions, is measured as the initial elongation.
Grip distance: 250 mm
Tension speed: 50 mm/min
Measurement temperature: 23°C

A method for producing the tire 2 includes a step of obtaining a raw cover and a step of vulcanizing the raw cover. In the step of obtaining a raw cover, a plurality of components of the tire 2 are assembled to form the raw cover. The step of obtaining the raw cover further includes a step of forming the band 16.

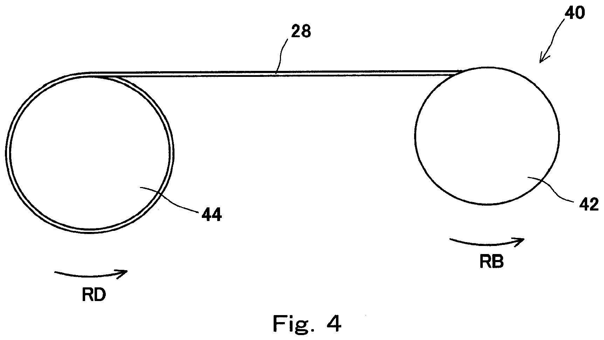

In the step of forming the band 16, as described above, the strip-shaped ply 28 is helically wound. FIG. 4 shows a state where the band 16 is being formed. A former 40 is used for forming the band 16.

The former 40 includes a bobbin 42 and a drum 44. The bobbin 42 can rotate in the direction indicated by an arrow RB. A speed at which the bobbin 42 rotates can be changed by not-illustrated means. The strip-shaped ply 28 is wound on the bobbin 42. The drum 44 can rotate in the direction indicated by an arrow RD. In the former 40, a speed at which the drum 44 rotates can be changed by not-illustrated means. In a not-illustrated step before the step of forming the band 16, the carcass ply 26 is layered over the outer surface of the drum 44.

In the step of forming the band 16, the strip-shaped ply 28 wound on the bobbin 42 is fed onto the drum 44. The strip-shaped ply 28 is wound onto the carcass ply 26. In the producing of the tire 2, the drum 44 is rotated at a constant speed. By adjusting a speed at which the bobbin 42 rotates, tension to be applied to the strip-shaped ply 28 is controlled. The tension exerts an influence on an initial elongation of the cord 32 included in the strip-shaped ply 28. When tension to be applied is increased, the initial elongation of the cord 32 can be decreased. When tension to be applied is decreased, the initial elongation of the cord 32 can be increased.

In this step, one strip-shaped ply 28 is wound from a position corresponding to one of ends of the band 16 to a position corresponding to the other of the ends of the band 16. At this time, low tension is applied to the strip-shaped ply 28 from the position corresponding to the one of the ends of the band 16 to a position corresponding to one of the boundaries CS. High tension is applied to the strip-shaped ply 28 from the position corresponding to the one of the boundaries CS to a position corresponding to the other of the boundaries CS. Low tension is applied to the strip-shaped ply 28 from the position corresponding to the other of the boundaries CS to the position corresponding to the other of the ends of the band 16. Thus, the band 16 in which the initial elongation of the cord 32 at the center portion C is less than the initial elongation thereof at the side portion S, can be obtained. This is the end of the step of forming the band 16.

The method for winding the strip-shaped ply 28 is not limited to the above-described method. The former 40 may have two bobbins 42, and two strip-shaped plies 28 fed from the bobbins 42, respectively, may be wound to form the band 16. At this time, one of the strip-shaped plies 28 is wound toward the center from a position corresponding to one of ends of the band 16, and the other of the strip-shaped plies 28 is wound from a position corresponding to the center of the band 16 toward a position corresponding to the other of the ends of the band 16. Each of the strip-shaped plies 28 may be wound outward from the position corresponding to the center of the band 16.

When the step of forming the band 16 is ended, the tread 4 is layered on the outer side of the band 16. Thus, a raw cover is obtained. This is the end of the step of obtaining the raw cover.

In the step of vulcanizing the raw cover, the raw cover is put into a mold (not shown). The outer surface of the raw cover contacts with a cavity surface of the mold. The inner surface of the raw cover contacts with a bladder or a rigid core 22 (also referred to as core). The raw cover is pressurized and heated in the mold. By the pressurizing and heating, rubber composition of the raw cover flows. Crosslinking reaction occurs in the rubber by the heating, to obtain the tire 2.

Advantageous effects of the present invention will be described below.

In the pneumatic tire 2 according to the present invention, the cord 32 of the band 16 has a single-stranded structure in which the filaments 36 formed from steel are stranded. Cost of the cord 32 having the single-stranded structure is low. In the tire 2, cost reduction can be achieved.

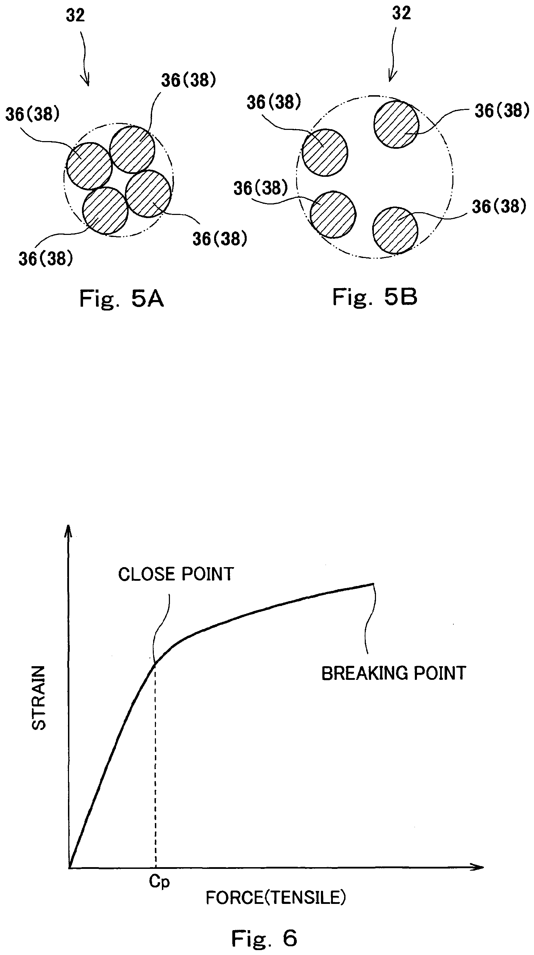

The cord 32 of the band 16 of the tire 2 has a gap between the filaments 36 such that the diameter ϕ of the smallest circle that surrounds the cross-sections 38 of the filaments 36 is not less than three times the diameter ψ of the filament 36 and not greater than six times the diameter ψ of the filament 36. The cord 32 is "loosely" stranded. The cord 32 is flexible. The cord 32 can be flexibly bent. FIG. 5A shows the cross-section of the cord 32 to which tensile force is applied. When tensile force is applied, the filaments 36 that are loosely stranded are brought into close contact with each other, whereby the cord 32 is extended. The cord 32 has an elongation higher than a conventional single-stranded cord. The cord 32 that is flexible and has a high elongation contributes to good ride comfort. The tire 2 provides excellent ride comfort.

FIG. 5B shows the cross-section of the cord 32 to which compressive force is applied. When compressive force is applied, a distance between the filaments 36 that are loosely stranded is likely to be increased. Since a gap is formed between the cross-sections 38 of the filaments 36, when compressive force is applied, the diameter of the filament 36 is likely to change. Compression stiffness of the cord 32 is reduced. The tire 2 can be flexibly deformed even when high compressive force is applied to the band 16. Abrupt change of stiffness feeling of the tire 2 caused by buckling is inhibited. The tire 2 has excellent resistance to buckling.

The diameter ϕ of the cord 32 is not greater than six times the diameter ψ of the filament 36. The diameter ϕ of the cord 32 is appropriately maintained. Therefore, in the band 16, the cord 32 can have a sufficient density. The band 16 has a sufficient binding force. This contributes to high-speed stability. Furthermore, to maintain appropriate diameter ϕ of the cord 32 contributes to maintain appropriate thickness of the band 16. This inhibits the mass of the tire 2 from increasing.

As described above, compression stiffness of the cord 32 is reduced. The cord 32 can be deformed so as to follow the magnitude of compressive force. The band 16 is linearly deformed with respect to compressive force. This contributes to ride comfort and steering stability. The tire 2 can provide excellent ride comfort and steering stability.

As described above, when tensile force is applied to the cord 32, the filaments 36 that are loosely stranded are brought into close contact with each other. At this time, rubber in the gaps between the filaments 36 is gotten caught between the filaments 36. This contributes to good "endurance feeling" when the tire 2 is under a high load.

FIG. 6 shows a graph representing a relationship between tensile force applied to the cord 32 and strain of the cord 32. A change rate (slope) of the strain to tensile force is great until the filaments 36 that are loosely stranded come into close contact with each other, when tensile force is applied. After close contact occurs in the cord 32, the strain of the filaments 36 themselves is strain of the cord 32, so that the slope becomes small. A point at which the slope changes is referred to as a close point. Specifically, a point at which the slope is reduced by 70% with respect to the slope between tensile force of 5N and tensile force of 20N, is the close point.

A tensile force Cp to the cord 32 at the close point is preferably not less than 30N. When the tensile force Cp at the close point is not less than 30N in the cord 32, the cord 32 is flexible and has a high elongation. The cord 32 effectively contributes to ride comfort. The tire 2 provides excellent ride comfort.

In the present invention, the close point is specified by tensile test for the cord 32 by using a commercially available tensile testing machine in compliance with "JIS G3510". Specifically, the tensile test for the cord 32 taken from the band 16 of the tire 2 is performed under the following measurement conditions. The close point is calculated based on the graph, shown in FIG. 6, obtained by measuring strain from load of 0N until the cord 32 is broken.
Grip distance: 250 mm
Tension speed: 50 mm/min
Measurement temperature: 23°C

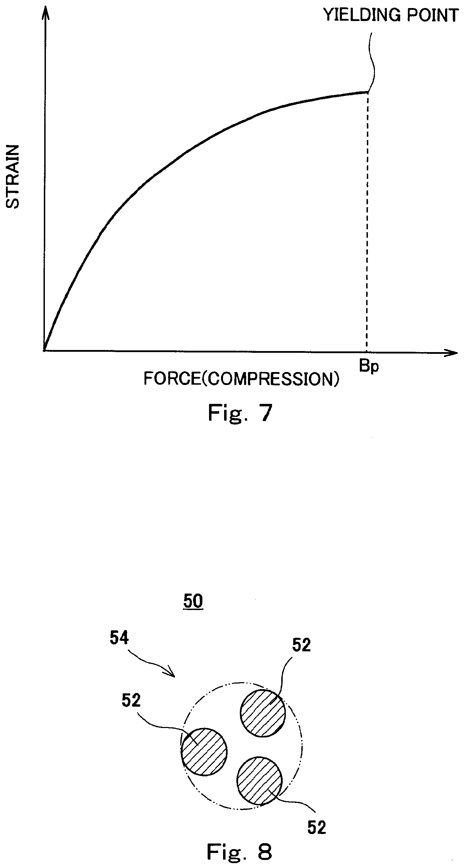

FIG. 7 shows a graph representing a relationship between compressive force applied to the cord 32 and strain of the cord 32. In a region in which the applied compressive force is low, the distance between the filaments 36 that are loosely stranded, and the diameter of the filament 36 increase, so the slope is great. When the compressive force becomes high, the increase of the distance and diameter becomes small, and the slope also becomes small. The cord 32 eventually yields.

A compressive force Bp at a time when the cord 32 yields is preferably not less than 150N. When the compressive force Bp at a time when the cord 32 yields is not less than 150N, the cord 32 can be flexibly deformed with respect to a high compressive force. This effectively contributes to resistance to buckling. The tire 2 has excellent resistance to buckling.

In the present invention, the compressive force Bp at a time when the cord 32 yields is specified by compression test for the cord 32 with the use of a commercially available compression testing machine. Specifically, the compression test for the cord 32 taken from the band 16 of the tire 2 is performed under the following measurement conditions.
Grip distance: 250 mm
Compression speed: 50 mm/min
Measurement temperature: 23°C

In the tire 2, the initial elongation of the cord 32 is not less than 0.1%. When the initial elongation of the cord 32 is not less than 0.1%, stiffness of the cord 32 is appropriately reduced. The tire 2 provides excellent ride comfort and has excellent impact absorption. Furthermore, appropriate reduction of stiffness of the cord 32 contributes to inhibition of buckling. Moreover, when the initial elongation is thus set, compressive force required for the cord 32 to yield can be increased. The tire 2 has excellent resistance to buckling. In these viewpoints, the initial elongation of the cord 32 is more preferably not less than 0.4%.

In the tire 2, the initial elongation of the cord 32 is not higher than 1.5%. When the initial elongation of the cord 32 is not higher than 1.5%, the cord 32 effectively contributes to binding force of the band 16. The tire 2 has excellent high-speed stability. In this viewpoint, the initial elongation of the cord 32 is more preferably not higher than 1.0%.

In the band 16, the initial elongation of the cord 32 is appropriately adjusted. In the cord 32, the initial elongation of the center portion C is different from the initial elongation of the side portion S. When each of the initial elongation of the center portion C and the initial elongation of the side portion S is thus adjusted, the tire 2 can exhibit required performance.

In FIG. 1, a double-headed arrow WB represents a distance, in the axial direction, from the equator plane CL to the outer side end of the band 16. A double-headed arrow WC represents a distance, in the axial direction, from the equator plane CL to the boundary CS between the center portion C and the side portion S. A ratio (WC/WB) of the distance WC to the distance WB is preferably not less than 30% and preferably not greater than 70%. When the ratio (WC/WB) is not less than 30% and not greater than 70%, and the initial elongation of the center portion C and the initial elongation of the side portion S are each adjusted, the tire 2 can exhibit required performance.

In the band 16 of the present embodiment, as described above, the initial elongation of the cord 32 at the center portion C is less than the initial elongation thereof at the side portion S. In other words, the stiffness of the side portion S is lower than the stiffness of the center portion C. In a two-wheeled automotive vehicle, a rider tilts the vehicle at cornering. At this time, an outer side portion, in the radial direction, of the side portion S in the tread 4 mainly contacts with the ground. In the tire 2, the more greatly the rider tilts the vehicle, the lower stiffness feeling is. This contributes to ground contact feeling at cornering. The tire 2 provides excellent ground contact feeling at cornering. The center portion C having stiffness higher than the side portion S contributes to high speed stability during straight running. The tire 2 can have good high-speed stability during straight running.

The initial elongation of the cord 32 at the center portion C may be higher than the initial elongation thereof at the side portion S in an example not covered by the invention. At this time, stiffness of the side portion S is higher than stiffness of the center portion C. In the tire 2, the more greatly a rider tilts the vehicle, the higher stiffness feeling is. This contributes to improvement of traction for leaving a corner. The center portion C having stiffness lower than the side portion S contributes to ride comfort during straight running. The tire 2 can provide good ride comfort during straight running.

The initial elongation of the cord 32 at the center portion C may be the same as the initial elongation thereof at the side portion S depending on performance required for the tire 2 in a further example not covered by the invention.

In the band 16, the diameter ψ of the filament 36 is preferably not less than 0.15 mm and preferably not greater than 0.35 mm. When the diameter ψ is not less than 0.15 mm, the cord 32 has sufficient stiffness and durability. When the diameter ψ is not greater than 0.35 mm, the filament 36 contributes to achievement of flexibility of the cord 32.

In the present invention, the dimensions and angles of the components of the tire 2 are measured in a state where the tire 2 is mounted on a normal rim (not shown), and inflated with air to a normal internal pressure, unless otherwise specified. During the measurement, no load is applied to the tire 2. In the description herein, the normal rim represents a rim that is specified according to the standard with which the tire 2 complies. The "standard rim" in the JATMA standard, the "Design Rim" in the TRA standard, and the "Measuring Rim" in the ETRTO standard are included in the normal rim. In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure. These apply to a tire described below.

In the above-described embodiment, an exemplary case where the number N of the filaments 36 of the cord 32 is four, is described. The number N of filaments of a cord is not less than 3 and not greater than 6. It may vary depending on tires. The number N of filaments is determined according to performance required for the tire and cost. For example, when low cost is required for a tire, the number N of filaments is three or four. For a tire to which high load is applied, the number N of filaments is five or six.

FIG. 8 shows a cross-section of a cord 54 having three filaments 52. Also in a band having the cord 54, a gap is formed between the filaments 52 such that the diameter ϕ is not less than three times the diameter ψ and not greater than six times the diameter ψ.

In a tire 50 of the present embodiment, the cord 54 of the band has a single-stranded structure in which the filaments 52 formed from steel are stranded. Cost of the cord 54 having a single-stranded structure is low. In the tire 50, cost can be made low.

A gap is formed between the filaments 52 in the cord 54 of the band of the tire 50. The cord 54 is "loosely" stranded. The cord 54 is flexible. The cord 54 has an elongation higher than a conventional cord. The cord 54 that is flexible and has a high elongation contributes to good ride comfort. The tire 50 provides excellent ride comfort.

When compressive force is applied, a distance between the filaments 52 that are loosely stranded is likely to be increased. Since a gap is formed between the cross-sections of the filaments 52, when compressive force is applied, the diameter of the filament 52 is likely to change. In the cord 54, compression stiffness is reduced. The tire 50 can be flexibly deformed even when high load is applied to the band. Abrupt change of stiffness feeling of the tire 50 caused by buckling is inhibited. The tire 50 has excellent resistance to buckling.

When the number of filaments is five or six, a gap is formed between the filaments such that the diameter ϕ is not less than 3.5 times the diameter ψ and not greater than 7 times the diameter ψ, which is not shown. Also in this tire, cost can be made low. This tire can also provide good ride comfort and have good resistance to buckling.

### EXAMPLES

### [Example 1]

A tire shown in FIG. 1 was produced. The size of the tire was 190/55R17. The specifications of the cord of the tire are indicated in Table 1. The cord had a single-stranded structure including four filaments. This is indicated as "1×4" in the cell of "cord structure". The diameter ψ of the filament of the cord was 0.25 mm. In this tire, a ratio (WC/WB) of the distance WC to the distance WB was 40%.

### [Comparative example 1]

A tire of comparative example 1 was obtained in the same manner as for example 1 except that the ratio (ϕ/ψ) and the initial elongations were as indicated in Table 1. In the tire, the filaments of the cord were tightly wound. A gap between the cords was the same as for example 1. This was a conventional tire.

### [Example 2]

A tire of example 2 was obtained in the same manner as for example 1 except that the ratio (ϕ/ψ) was as indicated in Table 1.

### [Examples 3 to 4]

Tires of examples 3 to 4 were each obtained in the same manner as for example 1 except that the initial elongations were as indicated in Table 1.

### [Example 5]

A tire of example 5 was obtained in the same manner as for example 1 except that the structure of the cord was as indicated in Table 1.

### [Ride comfort and resistance to buckling]

Each of the tires was mounted on a normal rim (rim size=MT6.00), and mounted to a rear wheel of a sport-type two-wheeled automotive vehicle having an engine displacement of 1000 cc. The tire was inflated with air to an internal pressure of 290 kPa. A commercially available tire (size: 120/70R17) was mounted to a front wheel. The two-wheeled automotive vehicle was caused to run in a circuit course and a city area having asphalt road surfaces, and sensory evaluation was made by the rider. The evaluated items were ride comfort and resistance to buckling. The results are each indicated in Table 1 as an index with the result of comparative example 1 being 100. The greater the value of the index is, the more excellent each of ride comfort and resistance to buckling is. The greater the value is, the better the evaluation is.

### [Mass]

The mass of each tire was measured. The reciprocal of the resultant value is indicated in Table 1 as an index with the index of comparative example 1 being 100. The greater the value of the index is, the less the mass is. The greater the value is, the better the evaluation is.

### [Cost]

Cost required for forming the band was calculated. The reciprocal of the resultant value is indicated in Table 1 as an index with the index of comparative example 1 being 100. The greater the value of the index is, the less the cost is. The greater the value is, the better the evaluation is.

**Table 1 Evaluation result**

| | Comparative example 1 | Example 1 | Example 2 | Example 3 | Example 4 | Example 5 |
|---|---|---|---|---|---|---|
| Cord structure | 1x4 | 1x4 | 1x4 | 1x4 | 1x4 | 1x3 |
| Ratio (ϕ/ψ) | 2.5 | 3.0 | 6.0 | 3.0 | 3.0 | 3.0 |
| Initial elongation of center portion [%] | 0.2 | 0.4 | 0.4 | 1.0 | 1.5 | 0.4 |
| Initial elongation of side portion [%] | 0.2 | 0.5 | 0.5 | 1.0 | 1.5 | 0.5 |
| Ride comfort | 100 | 120 | 115 | 110 | 105 | 105 |
| Resistance to buckling | 100 | 110 | 115 | 115 | 120 | 105 |
| Weight | 100 | 105 | 90 | 105 | 105 | 110 |
| Cost | 100 | 100 | 95 | 100 | 100 | 95 |

As indicated in Table 1, the tires of examples are comprehensively excellent. The evaluation result clearly indicates that the present invention is superior.

The technique for the band described above is applicable to various tires.

## Claims

1. A pneumatic tire (2, 50) comprising:
a tread (4); and
a band (16) disposed inward of the tread (4) in a radial direction, wherein
the band (16) includes a cord (32, 54) that is helically wound,
wherein
the cord (32, 54) has a single-stranded structure in which filaments (36, 52) formed from steel are stranded, and the number of the filaments (36, 52) is not less than three and not greater than six,
in a cross-section perpendicular to a direction in which the cord (32, 54) extends,
when ϕ represents a diameter of a smallest circle (E) that surrounds cross-sections (38) of the filaments (36, 52), and ψ represents a diameter of each filament (36, 52),
a gap is formed between the filaments (36, 52) such that the diameter ϕ is not less than three times the diameter ψ and not greater than six times the diameter ψ in the case of the number of the filaments (36, 52) being three or four,
a gap is formed between the filaments (36, 52) such that the diameter ϕ is not less than 3.5 times the diameter ψ and not greater than seven times the diameter ψ in the case of the number of the filaments (36, 52) being five or six, and
an initial elongation of the cord (32, 54) is not less than 0.1% and not greater than 1.5%, whereby a change amount of elongation obtained when load changes from 5N to 20N in a tensile test for the cord (32, 54) is measured as the initial elongation, taken from the band (16) of the tire (2, 50) under the following measurement conditions:
- Grip distance: 250 mm
- Tension speed: 50 mm/min
- Measurement temperature: 23°C,
**characterized in that**
the band (16) includes a center portion (C), and a pair of side portions (S) disposed outward of the center portion (C) in an axial direction, and
an initial elongation of the cord (32, 54) at the center portion (C) and an initial elongation of the cord (32, 54) at the side portion (S) are different from each other such that the initial elongation of the cord (32) at the center portion (C) is less than the initial elongation thereof at the side portion (S).

2. The pneumatic tire (2, 50) according to claim 1, wherein the diameter ψ of the filament (36, 52) is not less than 0.15 mm and not greater than 0.35 mm.

3. The pneumatic tire (2, 50) according to one of the preceding claims, wherein a tensile force (Cp) to the cord (32, 54) at a close point is not less than 30N, whereby the close point is specified by tensile test for the cord (32, 54) taken from the band (16) of the tire (2, 50) performed under the following measurement conditions:
- Grip distance: 250 mm
- Tension speed: 50 mm/min
- Measurement temperature: 23°C,
and whereby the close point is a point at which a slope of the strain to tensile force is reduced by 70% with respect to a slope between tensile force of 5N and tensile force of 20N.

4. The pneumatic tire (2, 50) according to one of the preceding claims, wherein a compressive force (Bp) at a time when the cord (32, 54) yields is not less than 150N, whereby the compressive force (Bp) at a time when the cord (32, 54) yields is specified by compression test for the cord (32) taken from the band (16) of the tire (2, 50) performed under the following measurement conditions.
- Grip distance: 250 mm
- Compression speed: 50 mm/min
- Measurement temperature: 23°C.

5. The pneumatic tire (2, 50) according to one of the preceding claims, wherein an angle of the cord (32, 54) relative to a circumferential direction of the tire (2, 50) is not greater than 15°.

## Patentansprüche

1. Luftreifen (2, 50), umfassend:
eine Lauffläche (4); und
ein Band (16), das in einer radialen Richtung innen von der Lauffläche (4) angeordnet ist, wobei
das Band (16) einen Kord (32, 54) aufweist, der schraubenförmig gewickelt ist,
wobei
der Kord (32, 54) eine einsträngige Struktur hat, in der aus Stahl gebildete Filamente (36, 52) verseilt sind, und die Anzahl der Filamente (36, 52) nicht kleiner als drei und nicht größer als sechs ist,
in einem Querschnitt senkrecht zu einer Richtung, in der sich der Kord (32, 54) erstreckt,
wenn ϕ einen Durchmesser eines kleinsten Kreises (E) darstellt, der die Querschnitte (38) der Filamente (36, 52) umgibt, und ψ den Durchmesser jedes Filaments (36, 52) darstellt,
eine Lücke zwischen den Filamenten (36, 52) gebildet ist, so dass der Durchmesser ϕ nicht kleiner als das Dreifache des Durchmessers ψ und nicht größer als das Sechsfache des Durchmessers ψ ist, wenn die Anzahl der Filamente (36, 52) drei oder vier beträgt,
eine Lücke zwischen den Filamenten (36, 52) gebildet ist, so dass der Durchmesser ϕ nicht kleiner als das 3,5-fache des Durchmessers ψ und nicht größer als das Siebenfache des Durchmessers ψ ist, wenn die Anzahl der Filamente (36, 52) fünf oder sechs beträgt, und
eine Anfangsdehnung des Kords (32, 54) nicht weniger als 0,1 % und nicht mehr als 1,5 % beträgt, wobei ein Änderungsbetrag der Dehnung, der erhalten wird, wenn sich eine Last in einem Zugversuch für den von dem Band (16) des Reifens (2, 50) genommenen Kord (32, 54) von 5 N auf 20 N ändert, als die Anfangsdehnung unter den folgenden Messbedingungen gemessen wird:
- Griffweite: 250 mm
- Spannungsgeschwindigkeit: 50 mm/min
- Messtemperatur: 23°C,
**dadurch gekennzeichnet, dass**
das Band (16) einen Mittelabschnitt (C) und ein Paar Seitenabschnitte (S) aufweist, die außerhalb des Mittelabschnitts (C) in einer axialen Richtung angeordnet sind, und
eine Anfangsdehnung des Kords (32, 54) an dem Mittelabschnitt (C) und eine Anfangsdehnung des Kords (32, 54) an dem Seitenabschnitt (S) voneinander verschieden sind, so dass die Anfangsdehnung des Kords (32, 54) an dem Mittelabschnitt (C) kleiner ist als seine Anfangsdehnung an dem Seitenabschnitt (S).

2. Luftreifen (2, 50) nach Anspruch 1, wobei der Durchmesser ψ des Filaments (36, 52) nicht kleiner als 0,15 mm und nicht größer als 0,35 mm ist.

3. Luftreifen (2, 50) nach einem der vorhergehenden Ansprüche, wobei eine Zugkraft (Cp) auf den Kord (32, 54) an einem Nahpunkt nicht weniger als 30N beträgt, wobei der Nahpunkt durch einen Zugversuch für den von dem Band (16) des Reifens (2, 50) genommenen Kord (32, 54) spezifiziert wird, der unter den folgenden Messbedingungen durchgeführt wird:
- Griffweite: 250 mm
- Spannungsgeschwindigkeit: 50 mm/min
- Messtemperatur: 23°C,
und wobei der Nahpunkt ein Punkt ist, an dem eine Steigung der Dehnung zur Zugkraft um 70% in Bezug auf eine Steigung zwischen Zugkraft von 5N und Zugkraft von 20N reduziert ist.

4. Luftreifen (2, 50) nach einem der vorhergehenden Ansprüche, wobei eine Druckkraft (Bp) zu einer Zeit, zu der der Kord (32, 54) nachgibt, nicht weniger als 150N beträgt, wobei die Druckkraft (Bp) zu einer Zeit, zu der der Kord (32, 54) nachgibt, durch einen Druckversuch für den von dem Band (16) des Reifens (2, 50) genommenen Kord (32) spezifiziert wird, der unter den folgenden Messbedingungen durchgeführt wird.
- Griffweite: 250 mm
- Druckgeschwindigkeit: 50 mm/min
- Messtemperatur: 23°C.

5. Luftreifen (2, 50) nach einem der vorhergehenden Ansprüche, wobei ein Winkel des Kords (32, 54) relativ zu einer Umfangsrichtung des Reifens (2, 50) nicht größer als 15° ist.

## Revendications

1. Bandage pneumatique (2, 50) comprenant :
une bande de roulement (4) ; et
un ruban (16) disposé à l'intérieur de la bande de roulement (4) dans une direction radiale, dans lequel
le ruban (16) inclut un câblé (32, 54) qui est enroulé de façon hélicoïdale,
**caractérisé en ce que**
le câblé (32, 54) a une structure à toron unique dans laquelle des filaments (36, 52) formés à partir d'acier sont toronnés, et le nombre de filaments (36, 52) n'est pas inférieur à trois et n'est pas supérieur à six,
dans une section transversale perpendiculaire à une direction dans laquelle s'étend le câblé (32, 54),
quand ϕ représente un diamètre du plus petit cercle (E) qui entoure des sections transversales (38) des filaments (36, 52), et ψ représente un diamètre de chaque filament (36, 52),
un intervalle est formé entre les filaments (36, 52) de telle sorte que le diamètre ϕ n'est pas inférieur à trois fois le diamètre ψ et n'est pas supérieur à six fois le diamètre ψ au cas où le nombre de filaments (36, 52) est de trois ou quatre,
un intervalle est formé entre les filaments (36, 52) de telle sorte que le diamètre ϕ n'est pas inférieur à 3,5 fois le diamètre ψ et n'est pas supérieur à sept fois le diamètre ψ au cas où le nombre de filaments (36, 52) est de cinq ou six, et
une élongation initiale du câblé (32, 54) n'est pas inférieure à 0,1 % et n'est pas supérieure à 1,5 %, dans lequel un changement quantitatif d'une élongation obtenue quand une charge change de 5 N à 20 N dans un essai de traction pour le câblé (32, 54) est mesuré à titre d'élongation initiale, pris à partir du ruban (16) du pneumatique (2, 50) dans les conditions de mesure suivantes :
- distance de préhension : 250 mm
- vitesse de traction : 50 mm/min
- température de mesure : 23 °C,
**caractérisé en ce que**
le ruban (16) inclut une portion centrale (C), et une paire de portions latérales (S) disposées à l'extérieur de la portion centrale (C) dans une direction axiale, et
une élongation initiale du câblé (32, 54) au niveau de la portion centrale (C) et une élongation initiale du câblé (32, 54) au niveau de la portion latérale (S) sont différentes l'une de l'autre de telle sorte que l'élongation initiale du câblé (32) au niveau de la portion centrale (C) est inférieure à l'élongation initiale de celui-ci au niveau de la portion latérale (S).

2. Bandage pneumatique (2, 50) selon la revendication 1,
dans lequel le diamètre ψ du filament (36, 52) n'est pas inférieur à 0,15 mm et n'est pas supérieur 0,35 mm.

3. Bandage pneumatique (2, 50) selon l'une des revendications précédentes, dans lequel une force de traction (Cp) sur le câblé (32, 54) au niveau d'un point fermé n'est pas inférieure à 30 N, dans lequel le point fermé est spécifié par un essai de traction pour le câblé (32, 54), pris à partir du ruban (16) du pneumatique (2, 50), exécuté dans les conditions de mesure suivantes :
- distance de préhension : 250 mm
- vitesse de traction : 50 mm/min
- température de mesure : 23 °C,
et dans lequel le point fermé est un point auquel une pente de la déformation par rapport à une force de traction est réduite à raison de 70 % à l'égard d'une pente entre une force de traction de 5 N et une force de traction de 20 N.

4. Bandage pneumatique (2, 50) selon l'une des revendications précédentes, dans lequel une force de compression (Bp) à un moment où le câblé (32, 54) cède n'est pas inférieure à 150 N, dans lequel la force de compression (Bp) au moment où le câblé (32, 54) cède est spécifiée par un essai de compression pour le câblé (32), pris à partir du ruban (16) du pneumatique (2, 50), exécuté dans les conditions de mesure suivantes :
- distance de préhension : 250 mm
- vitesse de compression : 50 mm/min
- température de mesure : 23 °C.

5. Bandage pneumatique (2, 50) selon l'une des revendications précédentes, dans lequel un angle du câblé (32, 54) relativement à une direction circonférentielle du pneumatique (2, 50) n'est pas supérieur à 15°.
